(19) Europäisches Patentamt

European Patent Office

Office européen des brevets

(11) **EP 1 831 628 B1**

(12) **EUROPEAN PATENT SPECIFICATION**

(45) Date of publication and mention
of the grant of the patent:
**25.05.2011 Bulletin 2011/21**

(51) Int Cl.:
*F25J 3/06* $^{(2006.01)}$     *B01D 45/16* $^{(2006.01)}$
*F16K 47/08* $^{(2006.01)}$     *F15C 1/16* $^{(2006.01)}$

(21) Application number: **05850508.2**

(22) Date of filing: **29.12.2005**

(86) International application number:
**PCT/EP2005/057219**

(87) International publication number:
**WO 2006/070020 (06.07.2006 Gazette 2006/27)**

(54) **THROTTLING VALVE AND METHOD FOR ENLARGING LIQUID DROPLET SIZES IN THE THROTTLED FLUID STREAM**

DROSSELVENTIL UND VERFAHREN ZUR VERGRÖSSERUNG DER FLÜSSIGKEITTRÖPFCHENGRÖSSEN IM GEDROSSELTEN FLUIDSTROM

ROBINET D'ETRANGLEMENT ET PROCEDE POUR ELARGIR DES TAILLES DE GOUTELETTES DE LIQUIDE DANS LE COURANT DE FLUIDE ETRANGLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.12.2004 EP 04107064**

(43) Date of publication of application:
**12.09.2007 Bulletin 2007/37**

(73) Proprietor: **TWISTER B.V.**
**2289 CC Rijswijk (ZH) (NL)**

(72) Inventor: **Betting, Marco**
**2289 CC Rijswijk (NL)**

(74) Representative: **Verschoor, Bas Christiaan**
**Nederlandsch Octrooibureau**
**P.O. Box 29720**
**2502 LS Den Haag (NL)**

(56) References cited:
**WO-A-03/055575**     **WO-A-2004/001260**
**WO-A-2004/083691**     **FR-A- 778 928**
**US-A- 4 384 592**     **US-A- 4 671 321**
**US-A- 5 442 924**     **US-B1- 6 513 345**

**Description**

BACKGROUND OF THE INVENTION

The invention relates to a throttling valve and a method for enlarging liquid droplet sizes in a fluid stream flowing through a throttling valve.

In the oil & gas industry control valves are used to control pressure, level, temperature and flow. In some cases these control valves operate at choked or throttled conditions, once sufficient pressure drop is created over the control valve. In processing natural gas this pressure reduction over a valve causes the temperature to drop without extracting heat or work from the gas. This so called isenthalpic expansion process is also known as Joule-Thompson (JT) cooling. The valve creating this pressure reduction is called a JT valve. The cooling effect over a JT valve is used to condense a part of the natural gas stream, such that the liquefied fraction can be separated in a vessel. For the majority of these separator vessels the driving force is either inertia or gravity forces or in other words the masses of the liquefied drops determine the efficiency of the separation. Such a Low Temperature Separator preceded by a JT valve is normally referred to as a JT-LTS system.

Even though the prime function of a JT valve is flow rate control, it is often forgotten that the second function is to create a separable liquid phase. In the gas processing industry the mean droplet size resulting from an isenthalpic expansion over a JT valve is unknown, hence the separation efficiency of downstream separators is to a large extent unknown. From time to time gas quality problems do occur due to suboptimal separation efficiency. In those cases it is of ten the hydrocarbon dew point, which remains too high, which indicates that especially hydrocarbon droplets tend to be too small.

International patent application WO 2004/001260 and US patents 4,384,592 and 4,671,321 disclose throttle valves that are equipped with swirl imparting means that generate vortices in the fluid flux passing through the valve.

The valves known from US patents 4,383,592 and 4,671,321 are provided with perforated sleeves in which the perforations have different orientations relative to a central axis of the sleeve, such that a plurality of vortices are generated in the fluid flux passing through the valve, which vortices may be counter-rotating and serve as noise dampeners.

The valve known from International patent application WO2004/001260 is provided with a valve stem that defines a fluidic vortex chamber with both tangential and non-tangential inlets. If the valve is fully open or nearly fully open fluid flows solely through the tangential inlets, without generating a swirl in the fluid flux. If the valve is nearly closed then fluid flows solely through the non-tangential inlets, thereby generating a vortex and resistance to flow, and suppressing erosive and cavitational wear of the valve mechanism.

US patents 4,055,961 and 4,544,390 and International patent application WO2004083691 disclose throttling valves in which gaseous components are condensed as a result of the Joule Thompson effect.

International patent application WO03055575 describes a method of separating condensable components from a fluid mixture in a multistage fluid separation assembly, whereby the fluid mixture is expanded and cooled and optionally separated by centrifugal force.

A problem with the known Joule Thomson and other throttling valves is that the size of the condensed liquid droplets is generally small, such that a mist flow is generated from which the liquid and gaseous phases cannot be easily separated.

It is an object of the present invention to solve this problem and to provide a throttling valve in which larger liquid droplets can be formed than in the known throttling valves.

SUMMARY OF THE INVENTION

In accordance with the invention there is provided a throttling valve having a housing, a valve body which is movably arranged in the housing to control the flux of a fluid stream flowing from a fluid inlet channel into a fluid outlet channel of the valve such that the fluid stream is expanded and cooled, and swirl imparting means which impose a swirling motion to the fluid stream flowing through the fluid outlet channel and which are oriented such that if the valve is fully opened the fluid stream swirls about a longitudinal axis of the fluid outlet channel thereby inducing liquid droplets to swirl towards the outer periphery of the fluid outlet channel and to coalesce.

The throttling valve optionally comprises a substantially conical central body which is arranged in the fluid outlet channel and which is substantially co-axial to a central axis of the fluid outlet channel and which generates a fluid outlet channel having a gradually increasing cross-sectional area in downstream direction, thereby generating a vortex with a swirl factor that promotes growth and coalescence of condensed fluid droplets.

The valve may further comprise a perforated sleeve via which fluid flows from the fluid inlet channel into the fluid outlet channel if in use the valve body permits fluid to flow from the fluid inlet channel into the fluid outlet channel, and the swirl imparting means are provided by longitudinally and circumferentially spaced perforations of the sleeve which have an at least partially tangential orientation relative to a longitudinal axis of the sleeve, such that in use the fluid stream is induced to swirl about the longitudinal axis of the fluid outlet channel.

At least some perforations may have a central axis, which crosses a longitudinal axis of the sleeve at a selected distance D and at a selected acute angle between 0 and 90 degrees and the inner surface of the perforated sleeve may be located at a radius R from the longitudinal axis of the sleeve such that the ratio between the distance D and the radius R is between 0.2 and 1, preferably between 0.5 and 0.99.

The valve may be a Joule Thompson valve having a substantially tubular fluid outlet channel and a valve body comprising a piston which is movable in a substantially longitudinal direction through the fluid outlet channel and the perforated sleeve may be secured to the piston such that a substantially annular downstream end of the fluid inlet channel at least partially surrounds the perforated sleeve and at least some fluid is induced to flow from the fluid inlet channel via non-radial perforations in the perforated sleeve into the fluid outlet channel when the valve body is in a fully open position.

In accordance with the invention there is also provided a method for enlarging droplet sizes in a multiphase fluid stream comprising liquid droplets and a carrier fluid flowing through an outlet section of a throttling valve, wherein swirl imparting means impose a swirling motion to the fluid stream flowing through the fluid outlet channel thereby inducing liquid droplets that are formed during expansion along the flow path to swirl towards the outer periphery of the fluid outlet channel and to coalesce into enlarged liquid droplets.

The fluid could be either 1) a pre-dominantly gaseous carrier with a liquid phase or 2) a predominantly liquid carrier with an immiscible liquid and/or gaseous phase. An example of option 1) is a low temperature separation (LTS) process with a JT-valve fed by a natural gas stream with liquid fraction of condensates, water and glycol. An example of option 2) is a condensate stabilization process with a throttling valve fed by a condensate stream with liquid fraction of water and/or glycol.

These and other features, objects and advantages of the throttling valve and method according to the present invention will become apparent from the accompanying claims, abstract and detailed description of an embodiment of the throttling valve according to the present invention in which reference is made to the accompanying drawings.

BRIEF DESCRIPTION OF THE DRAWINGS

FIG.1A depicts a longitudinal sectional view of a throttling valve according to the invention;
FIG. 1B depicts at an enlarged scale a cross-sectional view of the outlet channel of the throttling valve of FIG.1A;
FIG. 1C illustrates the swirling motion of the fluid stream in the outlet channel of the throttling valve of FIG. 1A and 1B;
FIG.1D illustrates the concentration of liquid droplets in the outer periphery of the outlet channel of the throttling valve of FIG. 1A and 1B;
FIG. 2A depicts a longitudinal sectional view of conventional throttling valve;
FIG.2B depicts at an enlarged scale a cross-sectional view of the outlet channel of the throttling valve of FIG.2A;
FIG.2C illustrates the erratic motion of the fluid stream in the outlet channel of the conventional valve of FIG.2A and 2B; and
FIG.2D illustrates the uniform mist flow with small liquid droplets in the outlet channel of the conventional throttling valve of FIG.2A and 2B.

DETAILED DESCRIPTION OF AN EMBODIMENT OF THE INVENTION

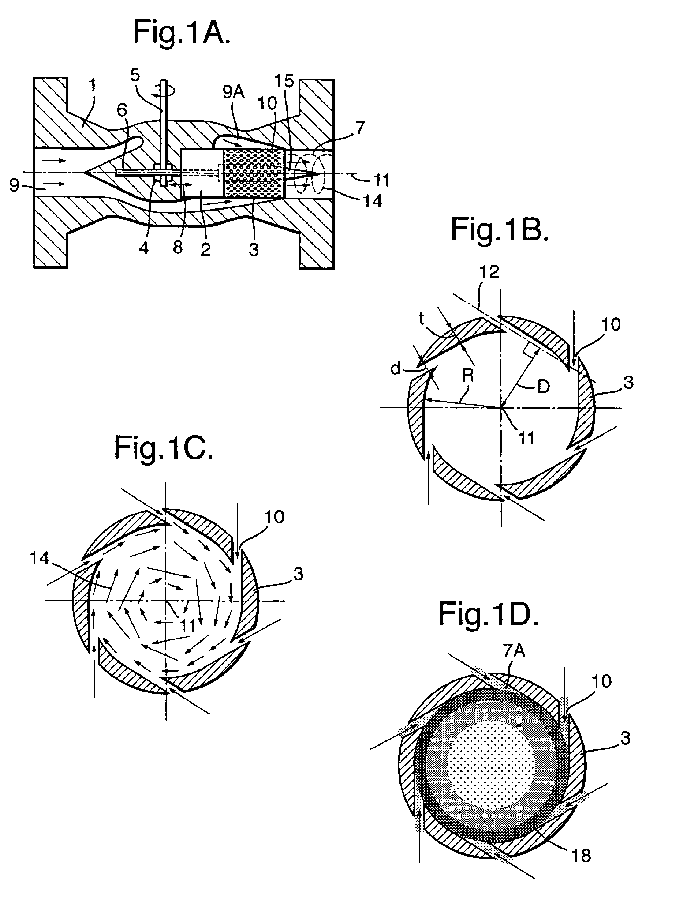

The embodiment of the throttling valve according to present invention shown in FIG.1A-1D has a valve geometry able to enhance the coalescence process of droplets formed during the expansion along the flow path of a Joule-Thomson or other throttling valve. These larger droplets are better separable than would be the case in traditional Joule-Thomson or other throttling valves.

The valve shown in FIG.1A comprises a valve housing 1 in which a piston-type valve body 2 and associated perforated sleeve 3 are slideably arranged such that by rotation of a gear wheel 4 at a valve shaft 5 a teethed piston rod 6 pushes the piston type valve body up and down into a fluid outlet channel 7 as illustrated by arrow 8. The valve has an fluid inlet channel 9 which has an annular downstream section 9A that may surround the piston 2 and/or perforated sleeve 3 and the flux of fluid which is permitted to flow from the fluid inlet channel 9 into the fluid outlet channel 7 is controlled by the axial position of the piston-type valve body 2 and associated perforated sleeve 3. The valve furthermore comprises a conical central body 15 which is substantially co-axial to a central axis 11 of the fluid outlet channel 7 and which generates an outlet channel 7 having a gradually increasing cross-sectional area in downstream direction, thereby generating a controlled deceleration of the fluid flux in the outlet channel 7 and a vortex with a swirl factor that promotes growth and coalescence of condensed fluid droplets.

FIG.1B illustrates that in the throttling valve according to the invention the perforated sleeve 3 comprises tilted or non-radial perforations 10, that are drilled in a selected partially tangential orientation relative to a central axis 11 of the fluid outlet channel 7 such that the longitudinal axis 12 of each of the perforations 10 crosses the central axis 11 at a distance D, which is between 0.2 and 1, preferably between 0.5 and 0.99 times the internal radius R of the sleeve 3.

The tilted perforations 10 create a swirling flow in the fluid stream flowing through the fluid outlet channel 7 as illustrated by arrow 14. The swirling motion may also be imposed by a specific geometry of the valve trim and/or valve stem. In the valve according to the invention the available free pressure is used for isenthalpic expansion to create a swirling flow in the fluid stream. The kinetic energy is then mainly dissipated through dampening of the vortex along an extended pipe length downstream the valve.

FIG.1C and 1D illustrate that the advantage of creating a swirling flow in the outlet channel of the valve is twofold:

1. Regular velocity pattern -> less interfacial shear -> less droplet break-up -> larger drops
2. Concentration of droplets in the outer circumference 7A of the flow area of the fluid outlet channel 7 -> large number density -> improved coalescence -> larger drops 18.

Although any Joule-Thomson or other choke and/or throttling type valve would be suitable to create a swirling flow, it is preferred to use a choke-type throttling valve as supplied by Mokveld Valves B.V. and disclosed in their International patent application WO2004083691.

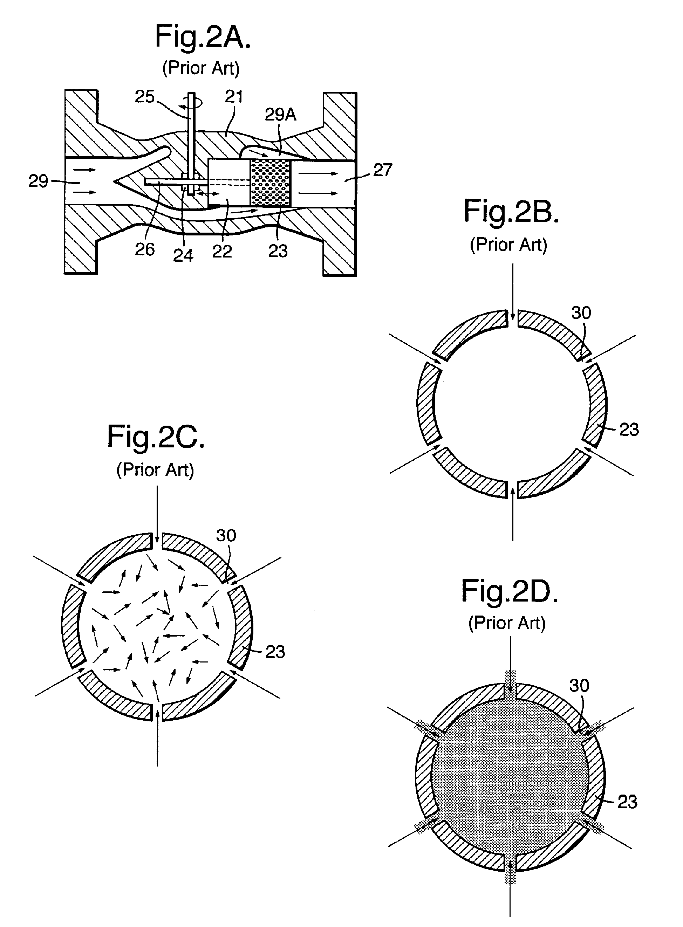

FIG.2A-2D illustrate a traditional cage-valve for flow control service a supplied by Mokveld Valves B.V. in which the flux of fluid is throttled over a perforated sleeve 23, which is connected to a piston-type valve body 22.

The conventional Mokveld throttling valve shown in FIG.2A comprises a valve housing 21 in which a piston-type valve body 22 and associated perforated sleeve 23 are slideably arranged such that by rotation of a gear wheel 24 at a valve shaft 25 a teethed piston rod 26 pushes the piston type valve body up and down into a fluid outlet channel 27 as illustrated by arrow 28. The valve has an fluid inlet channel 29 which has an annular downstream section 29A that may surround the piston 22 and/or perforated sleeve 23 and the flux of fluid which is permitted to flow from the fluid inlet channel 29 into the fluid outlet channel 27 is controlled by the axial position of the piston-type valve body 22 and associated perforated sleeve 23.

The conventional sleeve 23 comprises perforations 30 - slots or holes - that have a radial orientation i.e. rectangular to the cylindrical surface of the sleeve 23. By displacing the piston 22 and sleeve 23 in axial direction the flow area can be controlled.

As illustrated in FIG.2C the flow pattern in a cage valve with radial openings is highly disordered, hence introducing high shear forces causing droplets to break up into smaller droplets.

Calculations which illustrate effect of swirling flow on droplet size

The following calculations illustrate the effect of a swirling motion of the mist flow in the fluid outlet channel 7 on the coalescence and growth of liquid droplets.

The calculations are made by example only and do not limit the method and throttling valve according to the present invention to the application of any scientific theory.

Presumed that the valve operates at choked conditions, the average tangential entrance velocity ($U_{tan}$) of the fluid will be close to 150 m/s. For a typical cage diameter (D) of 80 mm the vortex strength $\Gamma$ would be:

$$\Gamma = \pi D U_{tan} = 38 \ \text{m}^2/\text{s} \qquad\qquad \text{Equation 1}$$

To determine at which radial position a droplet of diameter (d = 1 um) with density ($\rho_L$ = 650 kg/m$^3$) will rotate in a swirl of gaseous fluid with density ($\rho_G$ = 60 kg/m$^3$), viscosity ($v$ = 2.10$^{-7}$ m$^2$/s) and sink strength (Q = 4 m$^2$/s), the following expression is used:

$$R_{eq} = \frac{\Gamma}{\sqrt{Q}} \cdot \sqrt{2.\pi.\frac{2}{9}.\frac{d^2}{4.\pi^2.v}\left(\frac{\rho_L}{\rho_G}-1\right)} = 25 \ \text{mm} \qquad\qquad \text{Equation 2}$$

On the assumption that >>99% of all liquid mass is represented by droplets of d ≥ 1 um then this mass is concentrated in the flow area outside the radius $R_{eq}$ = 25 mm. The flow area in the cage outside $R_{eq}$ = 25 mm represents 61% of the total cross sectional flow area. The droplet number density (N) is now increased with a factor 1.67 compared to a non-swirling flow.

The basic formula for the number of collisions between droplets of the same size is, according Chesters :

$$N_{col} = -\frac{dN}{dt} = \frac{k_1}{2} u_{rel} d^2 N^2$$

Equation 3

In equation 3 :

$N_{col}$ = the number of collisions that occur per second and per $m^3$
$N$ = the number of droplets present per $m^Y$
$u_{rel}$ = the relative velocity between the droplets
$d$ = the droplet diameter =2r (the radius)
$k_1$ = a constant of order 1

Since N in a swirling flow is increased with a factor 1.67, the droplet collision rate increases with a factor $1.67^2$ = 2.8.

The relative velocity ($u_{rel}$) between droplets is determined with:

1. Brownian motion
2. Turbulent motion
3. Centrifugal drift motion

For coalescence the droplet size range of interest is $1 \leq d \leq 5$ um. For this size range the relative velocity is dominated by turbulent motion. Brownian motion can be neglected since molecular impingement will not influence droplets of 1 $\mu$m. Although centrifugal drift motion enhances relative droplet motion in swirling flows, it is still neglected as turbulence is the more dominant driver.

The coalescence efficiency can be expressed as the time in which a droplet multiplies its size. A droplet of d = 1 micron is not separable in normal gravity or centrifugal separators. To become separable a factor 5 increase in droplet diameter is minimal required. In order to get a factor 5 increase in droplet diameter, $5^3$ = 125 collisions have to occur. Therefore the minimum required retention time to let one drop collide 125 times with other drops ($t_{125}$) is defined in the table below. These equations for coalescence time scales only account for turbulent motion as driving force.

Table 1 : Coalescence time scales for swirling and non-swirling flow

| | No swirl | Swirl |
|---|---|---|
| $t_{125} = \dfrac{248}{b_{eff} N_0}$ <br><br> Minimum required retention time to create 5 times larger droplet by coalescence | 2.7 sec | 0.2 sec |
| $b_{eff} = Cd^3 \sqrt{\dfrac{\varepsilon}{\nu}}$ | $9.192*10^{-13}$ | $6.5*10^{-12}$ |
| Number density at to ($N_0$) | $1*10^{14}$ $m^{-3}$ | 1. $67*10^{14}$ $m^{-3}$ |
| Droplet diameter (d) | 1 $\mu$m | 1 $\mu$m |
| Turbulent dissipation ($\varepsilon$) | $1.10^5$ $m^2/s^3$ | $5.10^6$ $m^2/s^3$ |
| Kinematic viscosity ($\nu$) | $2.10^{-7}$ $m^2/s$ | $2.10^{-7}$ $m^2/s$ |
| Constant (C) (Saffman & Turner) | 1.3 | 1.3 |
| Required length scale ($L_{125}$) (axial velocity =10 m/s) | 27 m | 2 m |

A first order approximation of the effect of swirling flow on droplet coalescence, shows a major improvement of the coalescence rate due to flow turbulence. Enlarging droplets with a factor 5 - so that these becomes separable in a conventional separator vessel - requires a typical length scale of 2 meters for a swirling flow compared to 27 meters for a non-swirling flow.

As illustrated in FIG.1D the presence of a swirling motion in the throttling valve according to the invention concentrates the droplets 18 in a reduced flow area 7A at the outer boundary (61% of total) of the fluid outlet channel 7, such that the droplet number density increases with a factor of circa 1.67. Furthermore the rate of turbulent dissipation in de vortex core is large because of the high tangential velocity.

It will be understood that the creation of large liquid droplets in the outlet channel 7 of the throttling valve according to the invention will make it easier to separate the liquid and gaseous phase in a fluid separation assembly that may be arranged downstream of the throttling valve. Such a subsequent fluid separation assembly may comprise one or more gravity and/or cyclonic separation vessels.

The fluid could be either 1) a pre-dominantly gaseous carrier with a liquid phase or 2) a predominantly liquid carrier with an immiscible liquid and/or gaseous phase. An example of option 1) is a LTS process with a JT-valve fed by a natural gas stream with liquid fraction of condensates, water and glycol. An example of option 2) is a condensate stabilization process with a throttling valve fed by a condensate stream with liquid fraction of water and/or glycol.

**Claims**

1. A throttling valve having a housing (1), a valve body (2) which is movably arranged in the housing (1) to control the flux of a fluid stream flowing from a fluid inlet channel (9) into a fluid outlet channel (7) of the valve such that the fluid stream is expanded , and swirl imparting means (4, 5, 6) which impose a swirling motion of the fluid stream flowing through the fluid outlet channel (7); wherein the swirl imparting means (4, 5, 6) are oriented such that the fluid stream swirls about a longitudinal axis (11) of the fluid outlet channel (7) **characterized in that** the fluid is cooled when flowing from the fluid inlet channel into the fluid outlet channel of the valve and that the swirling motion is imposed to the fluidstream if the valve is fully opened thereby inducing the liquid droplets (18) that are formed during the expansion along the flow path of the valve to swirl towards the outer periphery (7A) of the fluid outlet channel (7) and to coalesce.

2. The throttling valve of claim 1, wherein a substantially conical central body (15) is arranged in the fluid outlet channel (7), which body is substantially co-axial to a central axis (11) of the fluid outlet channel (7) and which generates an outlet channel having a gradually increasing cross-sectional area in downstream direction, thereby generating a vortex with a swirl factor that promotes growth and coalescence of condensed fluid droplets (18).

3. The throttling valve of claim 1, wherein the valve further comprises a perforated sleeve (3) via which fluid flows from the fluid inlet channel (9) into the fluid outlet channel (7) if in use the valve body (2) permits fluid to flow from the fluid inlet channel (9) into the fluid outlet channel (7), and the swirl imparting means (4, 5, 6) are provided by longitudinally and circumferentially spaced perforations (10) of the sleeve (3) which have an at least partially tangential orientation relative to a longitudinal axis of the sleeve (3), such that in use the fluid stream is induced to swirl about the longitudinal axis (11) of the fluid outlet channel (7).

4. The throttling valve of claim 3, wherein at least some perforations (10) have a central axis (12), which crosses a longitudinal axis (11) of the sleeve (3) at a selected distance D and at a selected acute angle.

5. The throttling valve of claim 4, wherein the inner surface of the perforated sleeve (3) is located at a radius R from the longitudinal axis (11) of the sleeve and the ration between the distance D and the radius R is between 0.2 and 1.

6. The throttling valve of claim 5, wherein the ratio between the distance D and the radius R is between 0.5 and 0.99.

7. The throttling valve of any preceding claim, wherein the valve is a Joule Thompson valve having a substantially tubular fluid outlet channel (7) and a valve body (2) comprising a piston (6) which is movable in a substantially longitudinal direction (8) through the fluid outlet channel (7) and wherein the perforated sleeve (3) is secured to the piston (6) such that a substantially annular downstream end of the fluid inlet channel (9) at least partially surrounds the perforated sleeve (3) and at least some fluid is induced to flow from the fluid inlet channel (9) via non-radial perforations (10) in the perforated sleeve (3) into the fluid outlet channel (7) when the valve body (2) is in a fully open position.

8. A method for enlarging droplet sizes in a multiphase fluid stream comprising liquid droplets (18) and a carrier fluid flowing through an outlet section of a throttling device, wherein swirl imparting means (4, 5, 6) impose a swirling motion to the fluid stream flowing through the fluid outlet channel of the device thereby inducing liquid droplets that are formed during expansion along the flow path to swirl towards the outer periphery of the fluid outlet channel and to coalesce, **characterized in that** the device is a valve wherein the available free pressure is used for isenthalpic expansion.

9. The method of claim 8, wherein the throttling valve comprises:

   - a housing (1);
   - a valve body (2) which is movably arranged in the housing (1) such that the valve body controls multicomponent fluid flow from a fluid inlet channel (9) into the fluid outlet channel (7) of the valve;
   - a perforated sleeve (3) via which the multicomponent fluid flows from the fluid inlet channel (9) into the fluid outlet channel (7) if in use the valve body (2) permits fluid to flow from the fluid inlet channel (9) into the fluid outlet channel (7), and
   - wherein at least some perforations (10) of the sleeve have an at least partially tangential orientation relative to a longitudinal axis (11) of the sleeve, such that the multicomponent fluid is expanded and converted into a multiphase fluid stream, which is induced to swirl within the fluid outlet channel (7) and liquid droplets (18) are induced to swirl towards the outer periphery (7A) of the fluid outlet channel (7) and to coalesce into enlarged liquid droplets (18).

10. The method of claim 8 or 9, wherein a gas-liquid separation assembly is connected to the outlet channel of the choke valve, in which assembly liquid and gaseous phases of the multiphase fluid stream discharged by the valve are at least partly separated.

11. The method of claim 8 or 9, wherein the multiphase fluid stream comprises hydrocarbon and aqueous fluids and wherein at least a fraction of the aqueous fluids is converted into liquid water droplets which are induced to swirl towards the outer periphery (7A) of the fluid outlet channel (7) and to coalesce into enlarged water droplets and/or an annular water film at the outer periphery (7A) of the fluid outlet channel (7).

12. The method of claim 8 or 9, wherein the multiphase fluid stream comprises a gaseous carrier fluid and the fluid inlet and/or fluid outlet channel (9, 7) and/or other part of the interior of the throttling valve provides a fluid channel having a throat section in which the fluid stream is accelerated and is thereby induced to be expanded and cooled by means of the Joule Thomson effect.

13. The method of claim 12, wherein the multiphase fluid stream is expanded in the throat section to a transonic or supersonic velocity.

14. System for separating a liquid and gaseous phase in a fluid separation assembly, comprising a throttling valve according to any one of the claims 1 - 7 and a fluid separation assembly that is arranged downstream of the throttling valve.

15. Method for separating a liquid and gaseous phase in a fluid separation assembly, comprising

   - performing the method for enlarging droplet sizes in accordance with any one of the claims 8-13 using a throttling valve, and
   - performing separation using a fluid separation assembly arranged downstream of the throttling valve.

**Patentansprüche**

1. Drosselventil mit einem Gehäuse (1), einem Ventilkörper (2), der in dem Gehäuse (1) beweglich angeordnet ist, um die Strömung eines Fluidstroms, der von einem Fluideintrittskanal (9) in einen Fluidaustrittskanal (7) des Ventils strömt, derart zu steuern, daß der Fluidstrom expandiert, und mit Verwirbelungseinrichtungen (4, 5, 6), die eine Wirbelbewegung des durch den Fluidaustrittskanal (7) strömenden Fluidstroms hervorrufen; wobei die Verwirbelungseinrichtungen (4, 5, 6) derart orientiert sind, daß der Fluidstrom eine Wirbelbewegung um eine Längsachse (11) des Fluidaustrittskanals (7) ausführt,
**dadurch gekennzeichnet,**

**daß** das Fluid abgekühlt wird, wenn es von dem Fluideintrittskanal in den Fluidaustrittskanal des Ventils strömt, und **daß** die Wirbelbewegung auf den Fluidstrom bei vollständig geöffnetem Ventil ausgeübt wird, um **dadurch** zu veranlassen, daß die während der Expansion entlang des Strömungsweges des Ventils gebildeten Flüssigkeitströpfchen (18) in Richtung auf die äußere Peripherie (7A) des Fluidaustrittskanals (7) gewirbelt werden und sich vereinigen.

2.  Drosselventil nach Anspruch 1,
    wobei ein im wesentlichen konischer zentraler Körper (15) in dem Fluidaustrittskanal (7) angeordnet ist, wobei der Körper im wesentlichen koaxial mit einer zentralen Achse (11) des Fluidaustrittskanals (7) angeordnet ist und der Körper einen Austrittskanal mit einer allmählich zunehmenden Querschnittsfläche in der Richtung stromabwärts bildet, so daß **dadurch** ein Wirbel mit einem Verwirbelungsfaktor erzeugt wird, der das Anwachsen und die Vereinigung von kondensierten Fluidtröpfchen (18) unterstützt.

3.  Drosselventil nach Anspruch 1,
    wobei das Ventil ferner eine perforierte Hülse (3) aufweist, durch die das Fluid von dem Fluideintrittskanal (9) in den Fluidaustrittskanal (7) strömt, wenn der Ventilkörper (2) im Gebrauch ein Fluid von dem Fluideintrittskanal (9) in den Fluidaustrittskanal (7) strömen läßt, und wobei die Verwirbelungseinrichtungen (4, 5, 6) durch in Längsrichtung und in Umfangsrichtung beabstandete Perforationen (10) der Hülse (3) gebildet sind, die eine zumindest teilweise tangentiale Orientierung relativ zu einer Längsachse der Hülse (3) aufweisen, so daß im Gebrauch der Fluidstrom dazu veranlaßt wird, eine Wirbelbewegung um die Längsachse (11) des Fluidaustrittskanals (7) auszuführen.

4.  Drosselventil nach Anspruch 3,
    wobei zumindest einige Perforationen (10) eine zentrale Achse (12) aufweisen, die eine Längsachse (11) der Hülse (3) in einer ausgewählten Distanz D und unter einem ausgewählten spitzen Winkel kreuzt.

5.  Drosselventil nach Anspruch 4,
    wobei die innere Oberfläche der perforierten Hülse (3) sich auf einem Radius R von der Längsachse (11) der Hülse befindet und wobei das Verhältnis zwischen der Distanz D und dem Radius R zwischen 0,2 und 1 beträgt.

6.  Drosselventil nach Anspruch 5,
    wobei das Verhältnis zwischen der Distanz D und dem Radius R zwischen 0,5 und 0,99 beträgt.

7.  Drosselventil nach einem der vorhergehenden Ansprüche,
    wobei es sich bei dem Ventil um eine Joule-Thompson-Ventil mit einem im wesentlichen rohrförmigen Fluidaustrittskanal (7) und einem Ventilkörper (2) mit einem Kolben (6) handelt, der im wesentlichen in einer Längsrichtung (8) durch den Fluidaustrittskanal (7) bewegbar ist, und wobei die perforierte Hülse (3) an dem Kolben (6) derart befestigt ist, daß ein im wesentlichen ringförmiges strömungsabwärtiges Ende des Fluideintrittskanals (9) die perforierte Hülse (3) zumindest teilweise umgibt und zumindest etwas Fluid dazu veranlaßt wird, durch nicht radiale Perforationen (10) in der perforierten Hülse (3) von dem Fluideintrittskanal (9) in den Fluidaustrittskanal (7) zu strömen, wenn sich der Ventilkörper (2) in einer vollständig geöffneten Position befindet.

8.  Verfahren zum Vergrößern der Tröpfchengrößen in einem Mehrphasen-Fluidstrom, der Flüssigkeitströpfchen (18) und ein Trägerfluid aufweist, die durch einen Austrittsbereich einer Drosseleinrichtung strömen, wobei Verwirbelungseinrichtungen (4, 5, 6) dem Fluidstrom, der durch den Fluidaustrittskanal der Drosseleinrichtung strömt, eine Wirbelbewegung erteilen und **dadurch** Flüssigkeitströpfchen, die während der Expansion entlang des Strömungsweges gebildet werden, dazu veranlaßt werden, eine Wirbelbewegung in Richtung auf die äußere Peripherie des Fluidaustrittskanals auszuführen und sich zu vereinigen,
    **dadurch gekennzeichnet,**
    **daß** es sich bei der Drosseleinrichtung um ein Ventil handelt, wobei der verfügbare freie Druck für eine isenthalpe Expansion verwendet wird.

9.  Verfahren nach Anspruch 8,
    wobei das Drosselventil folgendes aufweist:

    - ein Gehäuse (1);
    - einen Ventilkörper (2), der in dem Gehäuse (1) beweglich angeordnet ist, so daß der Ventilkörper einen Mehrkomponenten-Fluidstrom von einem Fluideintrittskanal (9) in den Fluidaustrittskanal (7) des Ventils steuert;
    - eine perforierte Hülse (3), durch die der Mehrkomponenten-Fluidstrom von dem Fluideintrittskanal (9) in den Fluidaustrittskanal (7) strömt, wenn der Ventilkörper (2) im Gebrauch ein Fluid von dem Fluideintrittskanal (9) in den Fluidaustrittskanal (7) strömen läßt, und
- wobei zumindest einige Perforationen (10) der Hülse eine zumindest teilweise tangentiale Orientierung relativ zu einer Längsachse (11) der Hülse aufweisen, so daß der Mehrkomponenten-Fluidstrom expandiert und in einen Mehrphasen-Fluidstrom umgewandelt wird, der dazu veranlaßt wird, eine Wirbelbewegung in dem Fluidaustrittskanal (7) auszuführen und Flüssigkeitströpfchen (18) dazu veranlaßt werden, eine Wirbelbewegung in Richtung auf die äußere Peripherie (7A) des Fluidaustrittskanals (7) auszuführen und sich zu größeren Flüssigkeitströpfchen (18) zu vereinigen.

**10.** Verfahren nach Anspruch 8 oder 9,
wobei eine Gas-/Flüssigkeits-Trennanordnung mit dem Austrittskanal des Drosselventils verbunden ist, wobei in der Anordnung die flüssige und die gasförmige Phase des von dem Ventil abgegebenen Mehrphasen-Fluidstroms zumindest teilweise getrennt werden.

**11.** Verfahren nach Anspruch 8 oder 9,
wobei der Mehrphasen-Fluidstrom Kohlenwasserstoff und wäßrige Fluide aufweist und wobei zumindest ein Teil der wäßrigen Fluide in flüssige Wassertröpfchen umgewandelt wird, die zum Ausführen einer Wirbelbewegung in Richtung auf die äußere Peripherie (7A) des Fluidaustrittskanals (7) und zur Vereinigung zu größeren Wassertröpfchen und/oder zu einem ringförmigen Wasserfilm an der äußeren Peripherie (7A) des Fluidaustrittskanals (7) veranlaßt werden.

**12.** Verfahren nach Anspruch 8 oder 9,
wobei der Mehrphasen-Fluidstrom ein gasförmiges Trägerfluid aufweist und der Fluideintrittskanal (9) und/oder der Fluidaustrittskanal (7) und/oder ein anderer Teil im Inneren des Drosselventils einen Fluidkanal mit einem Verengungsbereich bildet, in welchem der Fluidstrom beschleunigt wird und **dadurch** veranlaßt wird, zu expandieren und aufgrund des Joule-Thomson-Effekts abzukühlen.

**13.** Verfahren nach Anspruch 12,
wobei der Mehrphasen-Fluidstrom in dem Verengungsbereich auf eine Geschwindigkeit im Bereich der schallnahen Geschwindigkeit oder der Überschallgeschwindigkeit expandiert wird.

**14.** System zum Trennen einer flüssigen und einer gasförmigen Phase in einer Fluidtrennungsanordnung, wobei das System ein Drosselventil nach einem der Ansprüche 1 bis 7 und eine Fluidtrennungsanordnung aufweist, die strömungsabwärts von dem Drosselventil angeordnet ist.

**15.** Verfahren zum Trennen einer flüssigen und einer gasförmigen Phase in einer Fluidtrennungsanordnung, wobei das Verfahren folgende Schritte aufweist:

- Ausführen des Verfahren zum Vergrößern der Tröpfchengrößen gemäß einem der Ansprüche 8 bis 13 unter Verwendung eines Drosselventils; und
- Ausführen der Trennung unter Verwendung einer Fluidtrennungsanordnung, die strömungsabwärts von dem Drosselventil angeordnet ist.

**Revendications**

**1.** Soupape d'étranglement ayant un boîtier (1), un corps de soupape (2) qui est agencé d'une manière mobile dans le boîtier (1) pour commander le flux d'un écoulement de fluide s'écoulant d'un canal d'entrée de fluide (9) dans un canal de sortie de fluide (7) de la soupape de sorte que l'écoulement de fluide s'expanse, et des moyens générateurs de tourbillon (4, 5, 6) qui imposent un mouvement tourbillonnaire de l'écoulement de fluide s'écoulant à travers le canal de sortie de fluide (7); où les moyens générateurs de tourbillon (4, 5, 6) sont orientés de telle sorte que l'écoulement de fluide tourbillonne autour d'un axe longitudinal (11) du canal de sortie de fluide (7), **caractérisé en ce que** le fluide est refroidi lorsqu'il s'écoule du canal d'entrée de fluide dans le canal de sortie de fluide de la soupape, et **en ce que** le mouvement tourbillonnaire est imposé à l'écoulement de fluide si la soupape est entièrement ouverte en induisant ainsi des gouttelettes de liquide (18) qui sont formées durant l'expansion le long du chemin d'écoulement de la soupape pour tourbillonner vers la périphérie extérieure (7A) du canal de sortie de fluide (7) et pour coalescer.

**2.** Soupape d'étranglement selon la revendication 1, dans laquelle un corps central sensiblement conique (15) est agencé dans le canal de sortie de fluide (7), ledit corps est sensiblement coaxial à un axe central (11) du canal de sortie de fluide (7), et qui produit un canal de sortie ayant une aire en section transversale qui augmente progressivement dans une direction aval en produisant ainsi un vortex avec un facteur tourbillonnaire qui encourage la croissance et la coalescence de gouttelettes de fluide condensé (18).

**3.** Soupape d'étranglement selon la revendication 1, dans laquelle la soupape comprend en outre un manchon perforé (3) par lequel le fluide s'écoule du canal d'entrée de fluide (9) dans le canal de sortie de fluide (7) si, en cours d'utilisation, le corps de soupape (2) permet l'écoulement du fluide du canal d'entrée de fluide (9) dans le canal de sortie de fluide (7), et les moyens générateurs de tourbillon (4, 5, 6) sont réalisés par des perforations (10) espacées longitudinalement et circonférentiellement du manchon (3) qui ont une orientation au moins partiellement tangentielle relativement à un axe longitudinal du manchon (3) de sorte qu'en cours d'utilisation, l'écoulement de fluide est amené à tourbillonner autour de l'axe longitudinal (11) du canal de sortie de fluide (7).

**4.** Soupape d'étranglement selon la revendication 3, dans laquelle au moins quelques perforations (10) ont un axe central (12) qui croise un axe longitudinal (11) du manchon (3) à une distance sélectionnée D et selon un angle aigu sélectionné.

**5.** Soupape d'étranglement selon la revendication 4, dans laquelle la surface intérieure du manchon perforé (3) se situe à un rayon R de l'axe longitudinal (11) du manchon, et le rapport entre la distance D et le rayon R est entre 0,2 et 1.

**6.** Soupape d'étranglement selon la revendication 5, dans laquelle le rapport entre la distance D et le rayon R est entre 0,5 et 0,99.

**7.** Soupape d'étranglement selon l'une quelconque des revendications précédentes, dans laquelle la soupape est une soupape de Joule Thompson ayant un canal de sortie de fluide sensiblement tubulaire (7) et un corps de soupape (2) comprenant un piston (6) qui est déplaçable dans une direction sensiblement longitudinale (8) à travers le canal de sortie de fluide (7), et dans laquelle le manchon perforé (3) est fixé au piston (6) de sorte qu'une extrémité en aval sensiblement annulaire du canal d'entrée de fluide (9) entoure au moins partiellement le manchon perforé (3), et au moins une certaine quantité de fluide est amenée à s'écouler du canal d'entrée de fluide (9) par des perforations non-radiales (10) dans le manchon perforé (3) dans le canal de sortie de fluide (7) lorsque le corps de soupape (2) se trouve dans une position entièrement ouverte.

**8.** Procédé pour agrandir les tailles de gouttelettes dans un écoulement de fluide multiphase comprenant des gouttelettes de liquide (18) et un fluide porteur s'écoulant à travers une section de sortie d'un dispositif d'étranglement, où des moyens générateurs de tourbillon (4, 5, 6) imposent un mouvement tourbillonnaire à l'écoulement de fluide s'écoulant à travers le canal de sortie de fluide du dispositif en induisant ainsi des gouttelettes de liquide qui sont formées durant l'expansion le long du chemin d'écoulement pour tourbillonner vers la périphérie extérieure du canal de sortie de fluide et pour coalescer, **caractérisé en ce que** le dispositif est une soupape dans laquelle la pression libre disponible est utilisée pour la détente isenthalpique.

**9.** Procédé selon la revendication 8, dans lequel la soupape d'étranglement comprend:

- un boîter (1);
- un corps de soupape (2) qui est agencé d'une manière mobile dans le boîtier (1) de sorte que le corps de soupape commande l'écoulement de fluide multicomposant d'un canal d'entrée de fluide (9) dans le canal de sortie de fluide (7) de la soupape;
- un manchon perforé (3) par lequel le fluide multicomposant s'écoule du canal d'entrée de fluide (9) dans le canal de sortie de fluide (7) si, en cours d'utilisation, le corps de soupape (2) permet l'écoulement du fluide du canal d'entrée de fluide (9) dans le canal de sortie de fluide (7), et
- dans lequel au moins quelques perforations (10) du manchon ont une orientation au moins partiellement tangentielle relativement à un axe longitudinal (11) du manchon de sorte que le fluide multicomposant est expansé et converti en un écoulement de fluide multiphase qui est amené à tourbillonner dans le canal de sortie de fluide (7), et des gouttelettes de liquide (18) sont amenées à tourbillonner vers la périphérie extérieure (7A) du canal de sortie de fluide (7) et à coalescer en gouttelettes de liquide agrandies (18).

**10.** Procédé selon la revendication 8 ou 9, dans lequel un ensemble de séparation de gaz-liquide est relié au canal de sortie de la soupape d'étranglement, dans lequel l'ensemble de liquide et des phases gazeuses de l'écoulement de fluide multiphase évacués par la soupape sont au moins partiellement séparés.

11. Procédé selon la revendication 8 ou 9, dans lequel l'écoulement de fluide multiphase comprend des hydrocarbures et des fluides aqueux, et où au moins une fraction des fluides aqueux est convertie en gouttelettes d'eau liquides qui sont amenées à tourbillonner vers la périphérie extérieure (7A) du canal de sortie de fluide (7) et à coalescer en gouttelettes d'eau agrandies et/ou un film d'eau annulaire à la périphérie extérieure (7A) du canal de sortie de fluide (7).

12. Procédé selon la revendication 8 ou 9, dans lequel l'écoulement de fluide multiphase comprend un fluide porteur gazeux et le canal d'entrée de fluide et/ou de sortie de fluide (9, 7) et/ou une autre partie de l'intérieur de la soupape d'étranglement réalise un canal de fluide ayant une section d'étranglement dans laquelle l'écoulement de fluide est accéléré et est de ce fait amené à s'expanser et à être refroidi au moyen de l'effet de Joule Thomson.

13. Procédé selon la revendication 12, dans lequel l'écoulement de fluide multiphase s'expanse dans la section d'étranglement à une vitesse transonique ou supersonique.

14. Système pour séparer une phase liquide et gazeuse dans un ensemble de séparation de fluide, comprenant une soupape d'étranglement selon l'une quelconque des revendications 1 à 7 et un ensemble de séparation de fluide qui est agencé en aval de la soupape d'étranglement.

15. Procédé de séparation d'une phase liquide et gazeuse dans un ensemble de séparation de fluide, comprenant

- exécuter le procédé pour agrandir les tailles des gouttelettes en accord avec l'une quelconque des revendications 8 à 13 en utilisant une soupape d'étranglement, et
- exécuter une séparation en utilisant un ensemble de séparation de fluide agencé en aval de la soupape d'étranglement.

## Fig.1A.

## Fig.1B.

## Fig.1C.

## Fig.1D.

# Fig.2A.
### (Prior Art)

# Fig.2B.
### (Prior Art)

# Fig.2C.
### (Prior Art)

# Fig.2D.
### (Prior Art)

**EP 1 831 628 B1**

**Patent documents cited in the description**

- WO 2004001260 A
- US 4384592 A
- US 4671321 A
- US 4383592 A
- US 4055961 A
- US 4544390 A
- WO 2004083691 A
- WO 03055575 A